# EUROPEAN PATENT SPECIFICATION

(11) **EP 0 341 804 B1**
(45) Date of publication and mention of the grant of the patent: **11.08.1993**
(21) Application number: 89300873.0
(22) Date of filing: 30.01.1989
(51) Int. Cl.: G11B 17/02, G11B 23/00, G11B 33/14, G11B 17/038

(54) **Disk pack disk spacer ring**
Plattenabstandsring für Plattenstapel
Bague-entretoise de disque pour pile de disques

(30) Priority: 18.04.1988 US 182675
(43) Date of publication of application: 15.11.1989
(73) Proprietor: SEAGATE TECHNOLOGY INTERNATIONAL, Georgetown, Grand Cayman Island (KY)
(72) Inventor: Chen, Tsu-Fang, Eden Prairie Minnesota 55344 (US)
(74) Representative: Miller, Joseph

(56) References cited:
- EP-A- 0 063 607
- US-A- 4 345 285
- US-A- 4 538 192
- US-A- 4 707 752
- IBM TECHNICAL DISCLOSURE BULLETIN vol. 26, no. 2, July 1983, NEW YORK, US pages 816 - 818; F. C. PEXTON: "HARD FILE DISK SPACER RING WITH GROOVES FOR AIR PASSAGE"
- PATENT ABSTRACTS OF JAPAN vol. 11, no. 350 (P-637)(2797) 17 November 1987, & JP-A-62 129991

## Description

This invention relates to disk pack disk spacer rings, in particular, to means for venting inner peripheries of closely spaced disks.

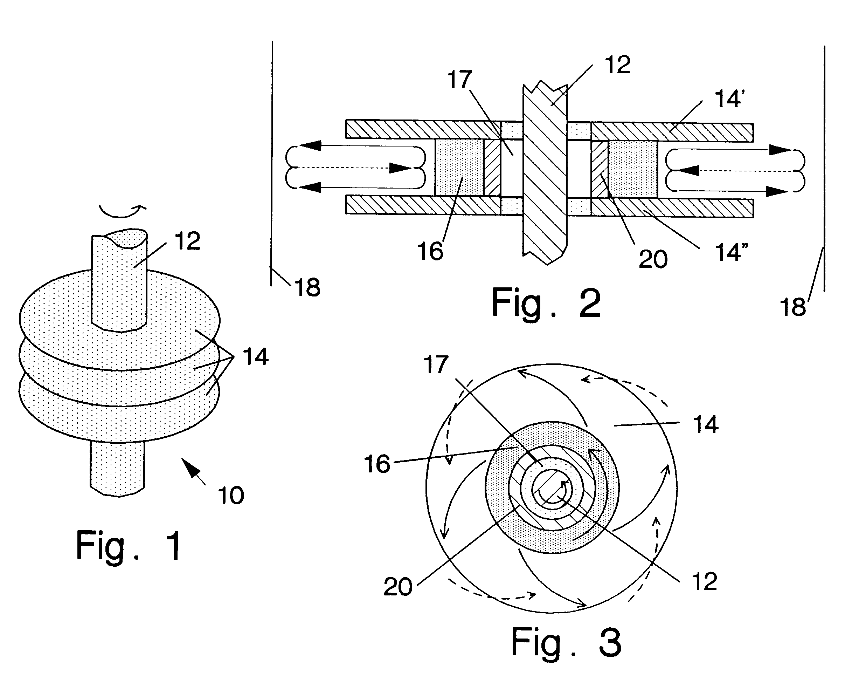

Fixed multi-disk disk packs (Figure 1) have a plurality of disks 14 so closely spaced, by spacer rings 20, that the viscosity of the air near the inner peripheries of the closely spaced disks is sufficient to cause solid body rotation of the air upon rotation of the disks 14 which are coupled to a rotating spindle 12 by conventional hub clamps (not shown). The solid body is indicated by reference numeral 16 in Figures 2 and 3. Outwardly of this solid body, disk rotation causes the disk surfaces to pump air outwards with increasing force towards the outer peripheries of the disks (see the spiral arrows of Figure 3). In the absence of another source of air to replace this outwardly flowing air, air from the peripheries flows back in near the centre of the space between adjacent disks (see the air flow arrows of Figure 2). In Figure 2, the reference numeral 18 represents the casing of a disk drive in which the disk pack is mounted.

The presence of this solid body rotation causes many problems, primarily because the air in the solid body does not mix with the air pumped beyond the peripheries of the disks. The air in the solid body cannot be filtered, and any debris present after manufacture or introduced later remains and can cause head crashes. The solid body air does not dissipate heat causing differential heating between the disk area in which the solid body exists and the rest of the disk which is vented. This affects the ability of ganged heads of a system having just one servo surface to track the various disk surfaces.

To prevent the formation of solid body rotation, vented spacer rings 20 (Figures 2 and 3) have been proposed (EP-A- 0 063 607). Vents in the vented spacer rings permit air from a vented plenum chamber 17 within a spacer ring/disk stack to communicate with the air between adjacent disks. This permits a continuous air flow from inner to outer disk periphery and prevents solid body rotation.

There are two drawback's to this approach. One drawback is that an air plenum is required thereby not permitting disks and spacers to be mounted flush with the spindle 12. Such a mounting arrangement can lead to a decrease in the width of the disk pack. The second drawback is that the plenum must be vented, this complicating spindle/hub design.

According to the present invention, there is provided a disk pack disk spacer ring characterised by comprising a spacer ring having formed thereon at least a pair of inter-communicating fluid channels the or each pair comprising a first channel outwardly diverging from a given radius of the spacer ring in the first direction, and a second channel outwardly diverging from said given radius in a second direction opposite the first direction such that the radius approximately bisects the angle between the two directions. Preferably the or each pair of inter-communicating fluid channels has a flow through channel in a circumferential inner surface, said flow through channel connecting said first and second channels.

The spacer ring may have opposed, flat, parallel surfaces normal to the axis of the spacer ring the first channel or channels being disposed in one of said flat surfaces and the second channel or channels being disposed in the other of said flat surfaces.

The angle of divergence of each of the channels may be the same, such that, in operation, the amount of fluid transversing through the or each pair of inter-communicating channels is independent of direction of rotation of the spacer ring.

In one embodiment there is provided a disk pack disk spacer ring according to the present invention in combination with spindle means for causing said spacer ring to rotate, the channels being so arranged on said spacer ring that, in operation, one of said channels scoops fluid into it and the other of said channels pumps the scooped fluid from it.

The or each pair of inter-communicating fluid channels may be sufficient to prevent formation of solid body rotation of fluid in the space between two disks of a disk pack, the disks being spaced apart by said spacer ring.

The invention is illustrated, merely by way of example, in the accompanying drawings, in which:-
Figure 1 is a perspective view of a plurality of disks of a disk pack mounted on a rotating spindle;
Figure 2 is a side cross sectional view of two disks separated by a spacer ring showing air flow near the peripheries of the disks and an area of solid body rotation;
Figure 3 is a top cross sectional view of a disk pack showing a spacer ring, outer periphery air flow and solid body rotation;
Figure 4 is a partial perspective view of one embodiment of a disk pack disk spacer ring according to the present invention;
Figure 5 is a top plan view of a spacer ring of Figure 4;
Figure 6 is a back plan view of a portion of the spacer ring of Figures 4 and 5 showing a flow through channel connecting upper and lower channels of a scoop/pump channel pair;
Figure 7 is a view similar to that of Figure 3 with the spacer ring of Figure 4 incorporated therein;
Figure 8 is a top plan view of a second embodiment of a disk pack disk spacer ring according to the present invention;
Figure 9 is a back plan view of a portion of the spacer ring of Figure 8; and
Figure 10 is a view similar to that of Figure 3 with the spacer ring of Figure 8.

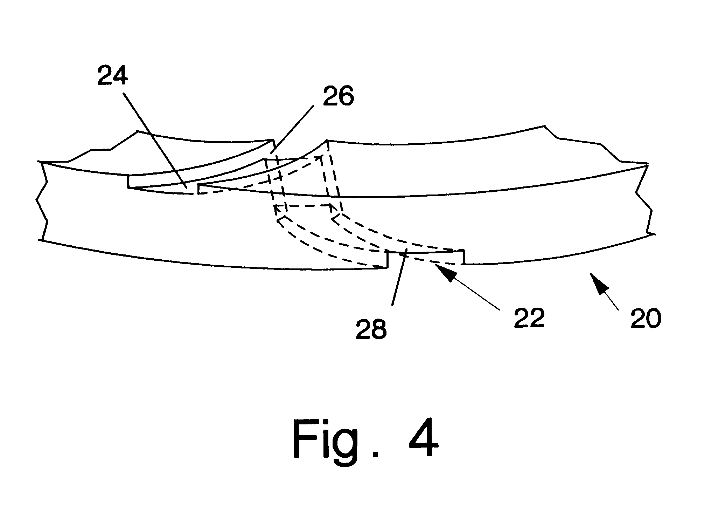

Figure 4 is a partial perspective view of a disk pack disk spacer ring 20 according to the present invention. A scoop/pump channel pair 22 comprises a first channel 24 formed in a top flat surface of the spacer ring 20 and outwardly diverging in a first direction away from a given radius of the spacer ring and a second channel 28 formed in a bottom flat surface of the spacer ring 20 outwardly diverging in a second direction away from the given radius, the second direction being opposite to the first direction of the first channel such that the given radius approximately bisects the angle between the first and second directions. The top and bottom flat surfaces of the spacer ring are parallel and normal to the axis of the spacer ring. A communicating channel 26 is formed on the inner circumferential surface of the spacer ring 20 connecting the first and second channels.

If the direction of rotation of the spacer ring 20 is to the right as seen in Figure 4, the second channel 28 scoops air in, and the first channel 24 pumps the scooped air out. If the direction of rotation is opposite, the reverse is true: the channel 24 scoops air in and the channel 28 pumps air out.

The two channels 24, 28 are preferably shaped identically. In this manner scoop/pump performance is identical no matter the direction of rotation of the spacer ring 20. Therefore, if inadvertently the spacer ring 20 is placed upside down between two disks during manufacture so that the channel 28 is on the top and diverging to the left and the channel 24 is on the bottom and diverging to the right, performance is unaffected. In this manner, the spacer ring can be mounted in the disk drive in either orientation and functions identically. This is an important advantage where human error makes inversion of the spacer ring during manufacture of disk packs probable.

In Figure 4, the channels 24, 28 are shown slightly curved away from the given radius. This improves both scoop and pump action, but is not essential. The channels could be straight or flared at the outer periphery of the spacer ring. The channel 26 is slightly inclined in the direction of motion of air therethrough. This eases transit of air between the channels 24, 28. However, a channel which is parallel to the axis of the spacer ring will function and may be easier to manufacture.

Various shapes are possible to optimise the design of the spacer ring keeping in mind general principles of fluid turbine machinery.

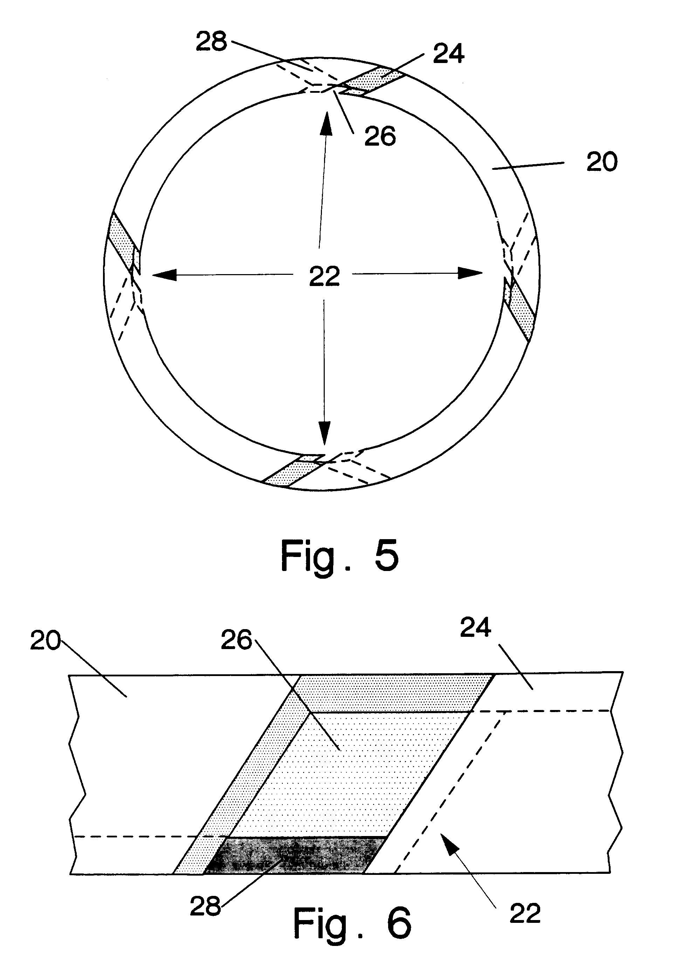

Figure 5 shows the spacer ring 20 in plan having four equi-angularly spaced scoop/pump channel pairs 22. With a conventional disk pack, if the distance between the openings of the channels 24, 28 and the outer periphery of the spacer ring 20 is of the order of the distance between the spacer ring and the outer boundary of the solid body rotation which occurs with solid spacer rings, then only four scoop/pump channel pairs are required. However, more or fewer may be required depending upon the spacing of the disks, the size of the spacer ring, and capacity of the scoop/pump channel pairs.

Figure 6 illustrates air flow through the channel 26. This channel comprises a recess cut or formed in the inner periphery of the spacer ring 20 and connecting the channels 24, 28. The channel 26 communicates air between a scoop channel (for example the channel 28) and a pump channel (for example the channel 24). This channel permits scoop/pump operation even if the inner circumferential surface of the spacer ring is flush against another surface, such as a spindle.

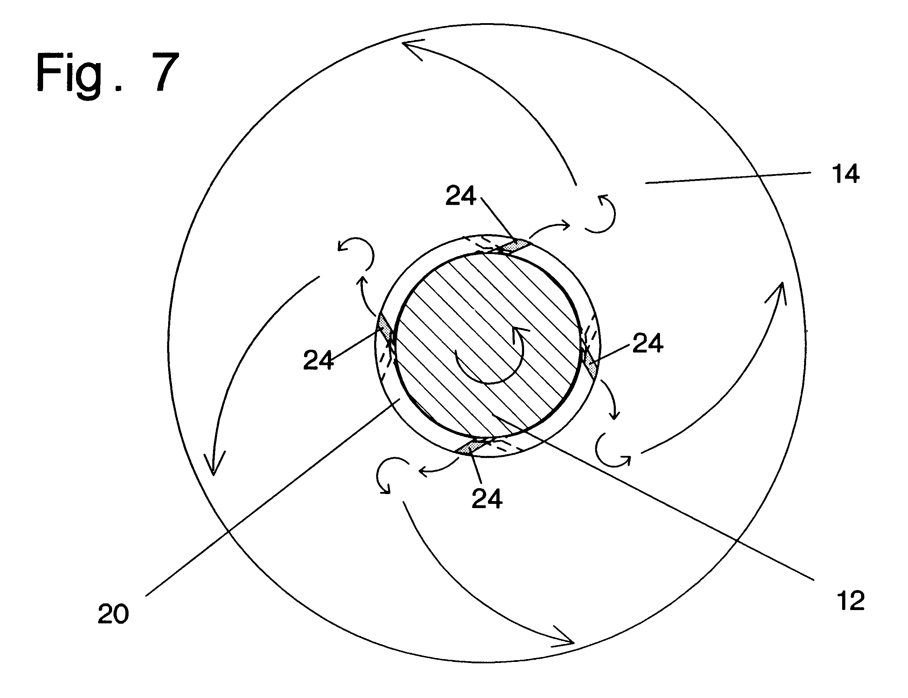

Figure 7 shows the spacer ring 20 of Figure 5 mounted flush on the spindle 12 of a disk drive. Spindle rotation is indicated by the highly curved arrow thereon. In this arrangement, there is no air plenum radially inwardly of the spacer ring to provide a source of air to communicate to the inner periphery of the disks 14. Here air is scooped in by the channels 28 (see Figure 4), flows through the channels 26 (see Figure 4), and is pumped out of the channels 24. Motion of the air on exit from the channels 24 is opposite to disk rotation and the direction of air flow towards the outer portions of the disks 14 is as indicated by the large spiral arrows. Thus, air flow reverses direction as shown by the sharply curved intermediate arrows and mixes with the air blowing off the disks.

Air returns to the spacer ring 20 from the outer peripheries of the disks to the centre of the space between the disks substantially as illustrated in Figure 2, and it is then scooped in by the channels 28.

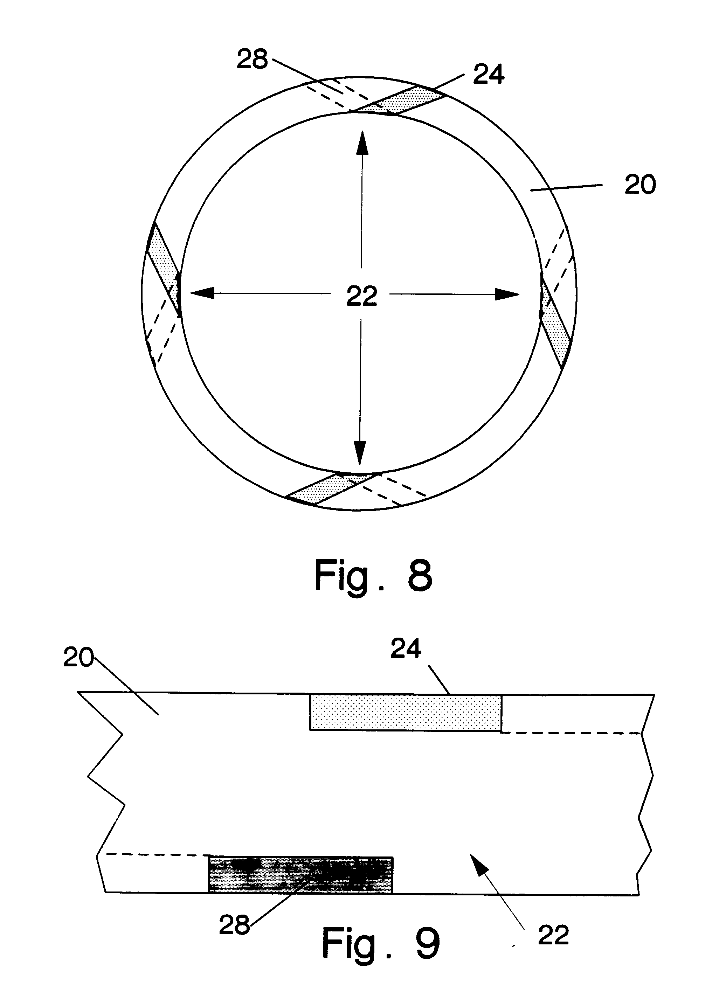

Figure 8 illustrates a second embodiment of a disk pack disk spacer ring according to the present invention wherein the channels 24, 28 are straight and there is no flow through channel 26 as in the embodiment illustrated in Figure 4. This embodiment is useful in those disk packs where an air plenum, vented or not, exists at the inner surface of the spacer ring. As can be seen from Figure 9, the channels 24, 28 are slightly off set from one another in the direction of air flow, with air flowing between the channels 28, 24, the direction depending on which way the spacer ring is rotating which, of course, depends upon the orientation of the spacer ring in the disk pack.

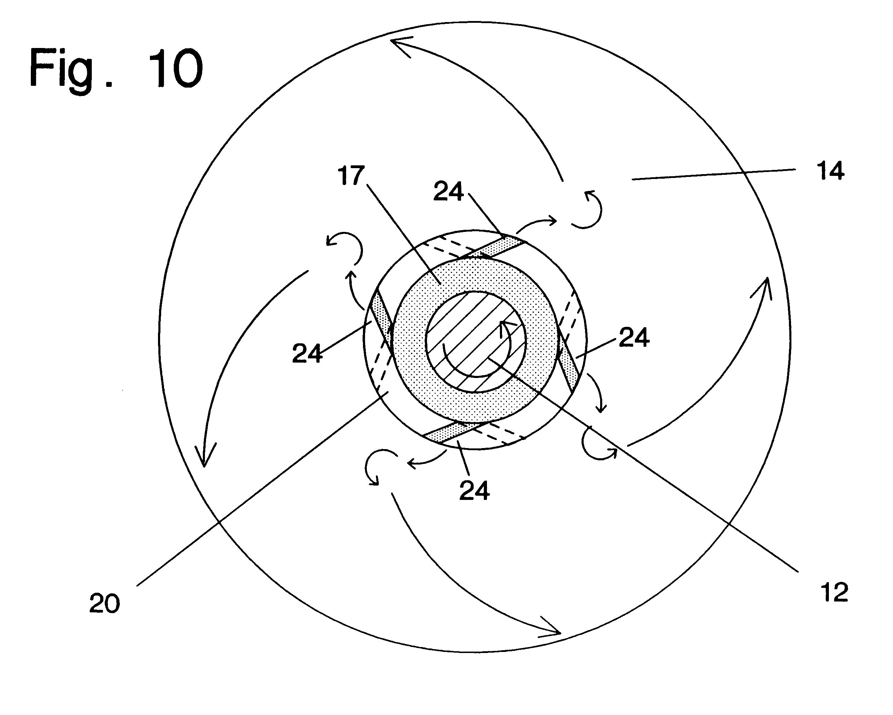

Figure 10 illustrates the spacer ring 20 of Figure 8 mounted spaced from the spindle 12 such as to form an air plenum 17 at the inner surface of the spacer ring 20. The air flow pattern is the same as that described in relation to Figure 7, save that the air flowing between the channels 28 (Figures 8 and 9) and the channels 24, flows from the plenum 17 and not in a channel.

It will be appreciated that other arrangements of spacer ring are possible. For example, the channels 24, 28 may be mounted on the same flat surface of the spacer ring.

## Claims

1. A disk pack disk spacer ring characterised by comprising a spacer ring (20) having formed thereon at least a pair of inter-communicating fluid channels (24, 28) the or each pair comprising a first channel (24) outwardly diverging from a given radius of the spacer ring in the first direction, and a second channel (28) outwardly diverging from said given radius in a second direction opposite the first direction such that the radius approximately bisects the angle between the two directions.

2. A spacer ring as claimed in claim 1 characterised in that the or each pair of inter-communicating fluid channels (24, 28) has a flow through channel (26) in a circumferential inner surface, said flow through channel (26) connecting said first and second channels (24, 28).

3. A spacer ring as claimed in claim 1 or 2 characterised in that the spacer ring has a pair of opposed, flat, parallel surfaces normal to the axis of the spacer ring the first channel or channels (24) being disposed in one of said flat surfaces and the second channel or channels (28) being disposed in the other of said flat surfaces.

4. A spacer ring as claimed in any preceding claim characterised in that the angle of divergence of each of the channels is the same, such that, in operation, the amount of fluid transversing through the or each pair of inter-communicating channels is independent of direction of rotation of the spacer ring.

5. A spacer ring as claimed in any preceding claim in combination with spindle means for causing said spacer ring to rotate, the channels being so arranged on said spacer ring that, in operation, one of said channels scoops fluid into it and the other of said channels pumps the scooped fluid from it.

6. A spacer ring as claimed in any preceding claim characterised in that the or each pair of inter-communicating fluid channels is sufficient to prevent formation of solid body rotation of fluid in the space between two disks of a disk pack, the disks being spaced apart by said spacer ring.

## Patentansprüche

1. Platten-Abstandsring für einen Plattenstapel, dadurch gekennzeichnet, daß er einen Abstandsring (20) umfaßt, an dem zumindestens ein Paar von miteinander in Verbindung stehenden Strömungsmittelkanälen (24, 28) ausgebildet ist, wobei das oder jedes Paar einen ersten Kanal (24), der ausgehend von einem vorgegebenen Radius des Abstandsringes in der ersten Richtung nach außen divergiert, und einen zweiten Kanal (28) umfaßt, der von dem vorgegebenen Radius aus in einer zweiten Richtung entgegengesetzt zur ersten Richtung nach außen divergiert, derart, daß der Radius angenähert den Winkel zwischen den beiden Richtungen halbiert.

2. Abstandsring nach Anspruch 1, dadurch gekennzeichnet, daß das oder jedes Paar von miteinander in Verbindung stehenden Strömungskanälen (24, 28) einen Strömungsvebindungskanal (26) in einer in Umfangsrichtung inneren Oberfläche aufwiest, wobei der Strömungsverbindungskanal (26) die ersten und zweiten Kanäle (24, 28) verbindet.

3. Abstandsring nach Anspruch 1 oder 2, dadurch gekennzeichnet, daß der Abstandsring zwei entgegengesetzte ebene parallele Oberflächen senkrecht zur Achse des Abstandsringes aufweist, daß der erste Kanal oder die ersten Kanäle (24) in einer der ebenen Oberflächen angeordnet ist bzw. sind, und daß der zweite Kanal oder die zweiten Kanäle (28) in der anderen der ebenen Oberflächen angeordnet ist bzw. sind.

4. Abstandsring nach einem der vorhergehenden Ansprüche, dadurch gekennzeichnet, daß der Divergenzwinkel jedes der Kanäle gleich ist, derart, daß im Betrieb die Menge an Strömungsmittel, die durch das oder jedes Paar von miteinander in Verbindung stehenden Kanälen hindurchströmt, von der Drehrichtung des Abstandsringes unabhängig ist.

5. Abstandsring nach einen der vorhergehenden Ansprüche, in Kombination mit einem Spindelteil, das eine Drehung des Abstandsringes hervorruft, wobei die Kanäle derart an dem Abstandsring angeordnet sind, daß im Betrieb einer der Kanäle Luft in sich einsaugt, während der andere der Kanäle die eingesaugte Luft aus sich herauspumpt.

6. Abstandsring nach einem der vorgehenden Ansprüche, dadurch gekennzeichnet, daß das oder jedes Paar von miteinander in Verbindung stehenden Strömungsmittelkanälen ausreicht, um die Ausbildung einer Vollkörperdrehung des Strömungsmittels in dem Raum zwischen zwei Platten eines Plattenstapels zu verhindern, wobei die Platten durch den Abstandsring voneinander in Abstand gehalten werden.

## Revendications

1. Anneau séparateur de disques pour pile de disques, caractérisé en ce qu'il comprend un anneau séparateur (20) sur lequel sont formés au moins une paire de canaux de fluide (24, 28) intercommuniquants comprenant un premier canal (24) qui diverge vers l'extérieur à partir d'un rayon donné dudit anneau séparateur, dans une première direction, et un second canal (28) qui diverge vers l'extérieur, à partir dudit rayon donné dans une seconde direction opposée à la première direction, de telle manière que le rayon forme approximativement la bissectrice de l'angle compris entre les deux directions.

2. Anneau séparateur selon la revendication 1, caractérisé en ce que la paire ou chaque paire de canaux de fluide (24, 28) présente un canal d'écoulement traversant (26) pratiqué dans une surface circonférentielle intérieure, et reliant lesdits premier et second canaux (24, 28).

3. Anneau séparateur selon l'une des revendications 1 ou 2, caractérisé en ce que l'anneau séparateur possède une paire de surface plates, parallèles, opposées, normales à l'axe de l'anneau séparateur, le premier canal ou les premiers canaux (24) étant disposés dans l'une desdites surfaces plates et le second canal ou les seconds canaux (28) étant disposés dans l'autre desdites surfaces plates.

4. Anneau séparateur selon l'une quelconque des revendications précédentes, caractérisé en ce que l'angle de divergence est le même pour tous les canaux, de sorte qu'en fonctionnement, la quantité de fluide qui traverse la paire ou chaque paire de canaux (24, 28) est indépendante du sens de rotation de l'anneau séparateur.

5. Anneau séparateur selon l'une quelconque des revendications précédentes, en combinaison avec un arbre servant à faire tourner l'anneau séparateur, les canaux étant agencés sur ledit anneau séparateur de telle manière qu'en fonctionnement, l'un des canaux écope le fluide et que l'autre éjecte le fluide écopé.

6. Anneau séparateur selon l'une quelconque des revendications précédentes, caractérisé en ce que la paire ou chaque paire de canaux de fluide (24, 28) est suffisante pour empêcher la rotation en bloc du fluide dans l'espace compris entre les disques d'une pile de disques, les disques étant espacés par ledit anneau séparateur.
